## Europäisches Patentamt

## European Patent Office

## Office européen des brevets

(19)

(11) Veröffentlichungsnummer: **0 018 322**
A1

(12) # EUROPÄISCHE PATENTANMELDUNG

(21) Anmeldenummer: **80810112.5**

(22) Anmeldetag: **02.04.80**

(51) Int. Cl.³: **B 01 F 5/06,** B 01 F 5/18, B 03 D 1/14

(30) Priorität: **12.04.79 CH 3538/79**

(43) Veröffentlichungstag der Anmeldung: **29.10.80** Patentblatt 80/22

(84) Benannte Vertragsstaaten: **AT BE DE FR GB IT LU NL SE**

(71) Anmelder: **Amacher, Paul, Industriestrasse 10, CH-8117 Fällanden (Zürich) (CH)**

(72) Erfinder: **Amacher, Paul, Industriestrasse 10, CH-8117 Fällanden (Zürich) (CH)**

(74) Vertreter: **Bovard, Fritz Albert et al, Bovard & Cie. Patentanwälte VSP-Rechtsanwälte Optingenstrasse 16, CH-3000 Bern 25 (CH)**

(54) Verfahren und Vorrichtung zur Anreicherung einer Flüssigkeit mit Gasen.

(57) In eine vertikale Säule (1), die aus einem oder mehreren rohrförmigen Teilen (2) zusammengeschraubt ist, werden die von Gasen zu behandelnde Flüssigkeit sowie die Gase unter Druck eingeführt. In jedem rohrförmigen Teil (2) der Säule (1) befindet sich ein hohler Kugeltrichter (3, 3'), der eine elektrisch leitende Oberfläche und eine vergrößerte, rauhe Kopffläche aufweist. Die Kugel (3a) weist eine Eintrittsöffnung (4) für die Flüssigkeit und die Gase auf, die in den Innenraum der Kugel (3a) führt. Sie ist etwa in tangentialer Richtung quer zur Längsachse des Kugeltrichters (3, 3') gelegt. Durch ihre Ausrichtung wird der in die Kugel (3a) eintretenden Flüssigkeit die verlangte Strömungsrichtung gegeben. In der Säule (1) wird die Flüssigkeit elektrolytisch-physikalisch oder nur physikalisch gespalten und anschließend in eine zentripetale Wirbelbewegung gesetzt. Auf diese Weise wird die Flüssigkeit in der Säule (1) mit Gasen im höchsten Grade gesättigt, wobei eine solche Sättigung auf dem höchsten Grad über mehrere Stunden anhält.

# Verfahren und Vorrichtung zur Anreicherung einer Flüssigkeit mit Gasen

Die Erfindung betrifft ein Verfahren zur Anreicherung einer Flüssigkeit, wie Wasser, Milch, mit Gasen, wie Sauerstoff, Kohlendioxyd, wobei die Flüssigkeit und die Gase zwangsläufig in eine vertikale Säule eingeführt werden, um sie zu durchfliessen, und eine Vorrichtung zur Ausführung des Verfahrens, mit einer aus mindestens einem rohrförmigen Teil bestehenden Säule, einem die Flüssigkeit in die Säule unter Druck fördernden Mittel und einem die Gase in die Säule unter Druck fördernden Mittel.

Es ist bekannt, zum Beispiel Luft ins Wasser durch Venturidüsen einzublasen, um einen höheren Sauerstoffgehalt im Wasser zu erhalten. Die auf diese Weise ins Wasser eingeblasene Luft verbindet sich aber nicht mit den Molekülen von Wasser und entweicht nach einer kurzen Zeit wieder aus dem Wasser. Die Entweichungszeit bewegt sich in Grössenordnung von einigen Minuten, das heisst, dass die Luft in dem Wasser keine Stabilität hat.

Eine Vorrichtung zur Vermischung und Zerstreuung von Gas in Form von feinen Blasen in einem Flüssigkeitskörper in einem Behälter durch die Rotation eines Flügelrades ist in der britischen Patentschrift Nr. 1 521 785 beschrieben. Der sich unter einer Hülle im Behälter befindliche Raum ist eine Mischzone, in welcher Gas und Flüssigkeit durch die Schaufel des Flügelrades einer Wirbelbewegung unterworfen sind.

Auf diese Weise wird in das Abwasser Luft zugeführt oder der im Wasser gelöste Sauerstoff durch die Vermischung eines inerten Gases mit Wasser entfernt, wobei das inerte Gas den Sauerstoff ersetzt. Die Vorrichtung kann auch für Flotationsverfahren verwendet werden, bei welchem Festpartikel in schlammartigen oder unvermischbaren Flüssigkeitströpfchen in einer Emulsion von dem Hauptkörper der Flüssigkeit getrennt werden. Dabei haften die kleinen Blasen wahlweise an den aufzuschlämmenden Festpartikeln oder Tröpfchen, welche durch die Schwimmkraft der Blasen zur Oberfläche der Flüssigkeit steigen.

Auch durch diese Vorrichtung wird nur eine Vermischung von Gasen mit den Flüssigkeiten erreicht, wobei eine solche Vermischung nur kurzfristig (Minuten) anhält. Die beschriebene Vorrichtung weist darüber hinaus verschiedene mechanische Teile auf, die verschliess- und störungsanfällig sind. Dementsprechend ist der Unterhalt auch kostspielig.

Es ist die Aufgabe der Erfindung, ein Verfahren und eine Vorrichtung zur Anreicherung einer Flüssigkeit, wie Wasser, Milch, mit Gasen, wie Sauerstoff, Kohlendioxyd, vorzuschlagen bzw. zu schaffen, die es ermöglicht, dass die Flüssigkeit mit Gasen im höchsten Grade gesättigt wird, wobei eine solche Sättigung auf dem höchsten Grad über mehrere Stunden anhalten soll. Des weiteren soll die Vorrichtung eine einfache, unkomplizierte Konstruktion haben, die für die Anreicherung von kleinen bis grossen Mengen von Flüssigkeit mit Gasen geeignet ist. Eine solche Vorrichtung soll praktisch wartungsfrei sein.

Diese Aufgabe wird erfindungsgemäss auf solche Weise erfüllt, dass die Flüssigkeit während des Durchflusses der Säule mindestens einmal physikalisch oder elektrolytisch-physikalisch gespalten und anschliessend in eine zentripetale Wirbelbewegung gesetzt wird, um die Gase während des Spalt- und Wirbelvorganges vollständig aufzunehmen.

Die erfindungsgemässe Vorrichtung zur Ausführung dieses Verfahrens ist gekennzeichnet durch einen hohlen in jedem rohrförmigen Teil der Säule angeordneten Kugeltrichter mit einer elektrisch leitenden Oberfläche und einer in das Innere der Kugel führenden Eintrittsöffnung, die so ausgerichtet ist, dass sie die Strömungsrichtung der in die Kugel eintretenden Flüssigkeit bestimmt.

Mit Vorteil besteht der Kugeltrichter aus mit Metall bezogenem Glas oder Metall, wobei die Oberfläche, auf welche die Flüssigkeit vor dem Eintritt in die Kugel aufprallt, durch eine rauhe, auf die Glas- oder Metallunterlage galvanisch aufgetragene Metallschicht vergrössert ist.

Die Erfindung wird nachstehend anhand der Zeichnungen beispielsweise näher erläutert. Es zeigen

Fig. 1 einen Längsschnitt der vertikalen Säule der Vorrichtung mit hintereinander gereihten Kugeltrichtern, deren der obere von einem Mantel mit einem Kopf umschlossen ist,

Fig. 2 einen Schnitt durch die Kugel des oberen Kugeltrichters entlang der Linie II-II der Fig. 1,

Fig. 3 eine Ansicht eines Teiles des entwickelten Mantels, von welchem der obere Kugeltrichter umschlossen ist, mit einem Rechtseinstich,

Fig. 4 eine Ansicht eines Teiles des entwickelten Mantels, von welchem der obere Kugeltrichter umschlossen ist, mit einem Rechts- und einem Linkseinstich,

Fig. 5 eine Ansicht eines Teiles des entwickelten Mantels, von welchem der obere Kugeltrichter umschlossen ist, mit einem Linkseinstich,

Fig. 6 eine Ausführungsform der Anlegung des Gleichstromes an den Trichter des Kugeltrichters, und

Fig. 7 eine Ansicht des unteren Teiles der Säule mit dem unteren Kugeltrichter in zerlegtem Zustand.

Die von Gasen, wie Sauerstoff, Kohlendioxyd, zu behandelnde Flüssigkeit, wie Wasser, Milch, wird mittels einer nicht dargestellten Pumpe unter Druck in eine Säule 1 zugeführt. Gleichzeitig werden in die Säule 1 die zur Anreicherung der Flüssigkeit bestimmten Gase von nicht dargestellten Gasquellen über ein nicht dargestelltes Druckreduzierventil ebenfalls unter Druck zugeführt. Die Säule 1 besteht aus mehreren rohrartigen Teilen 2, die an seinen Endteilen mit Aussengewinden versehen sind; jeweils zwei Teile 2 sind mittels eines Ringes 12 mit Innengewinde dichtend zusammengeschraubt. Die Säule 1 kann auch nur aus einem einzigen rohrförmigen Teil 2 bestehen. Die rohrförmigen Teile 2 können aus verschiedenen Materialien hergestellt sein und verschiedene Durchmesser aufweisen; dies hängt von der Agressivität und/oder der Temperatur der zu behandelnden Medien und auch von deren Mengen ab. Die in die Säule 1 eingeführte Flüssigkeit sowie die in die Säule 1 eingeführten Gase durchfliessen die Säule unter Druck von oben nach unten, wobei die Flüssigkeit bei ihrem Durchlauf Widerstände zu überwinden hat, wie weiter erläutert wird.

In jedem rohrförmigen Teil 2 der Säule 1 befindet sich nämlich ein hohler Kugeltrichter 3, der eine elektrisch leitende Oberfläche aufweist. Der Kugeltrichter 3 kann aus Glas bestehen oder ganzmetallig sein. Im Falle, dass er aus Glas besteht, ist das Glas mit Metall überzogen, um die Oberfläche des Kugeltrichters 3 elektrisch leitend zu gestalten. Die Kugel 3a des Kugeltrichters 3 ist in der Säule 1 nach oben gerichtet, wobei der Trichter 3b nach unten weist. Die Kugeloberfläche ist durch eine rauhe, auf die Glas- oder Metallunterlage galvanisch aufgetragene Metallschicht 5 vergrössert. Die Kugel weist eine Eintrittsöffnung 4 für die Flüssigkeit und die Gase auf, die in den Innenraum der Kugel 3a führt. Diese Eintrittsöffnung ist etwa in tangentialer Richtung quer zur Längsachse des Kugeltrichters 3 gelegt. Durch ihre Ausrichtung wird der in die Kugel 3a eintretenden Flüssigkeit die verlangte Strömungsrichtung gegeben. Die Eintrittsöffnung 4 kann einen rechten oder linken Drall besitzen, so dass der Flüssigkeit in der Kugel 3a eine Wirbelbewegung im Uhrzeigersinne oder gegen den Uhrzeigersinn erteilt wird.

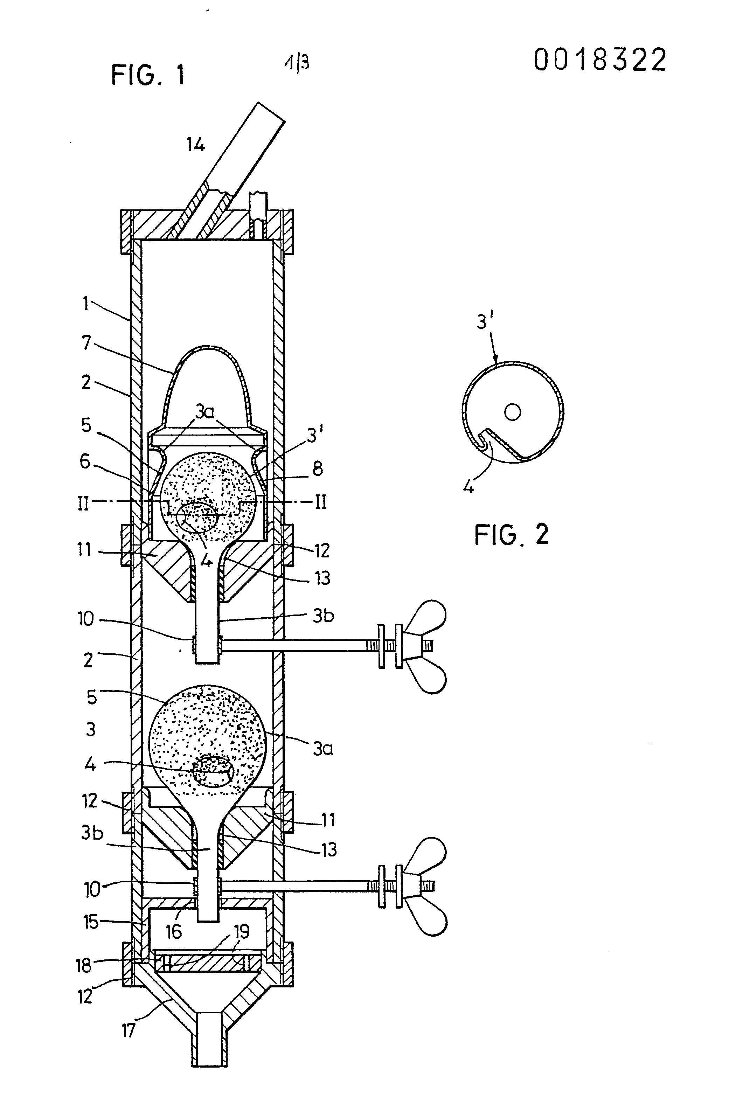

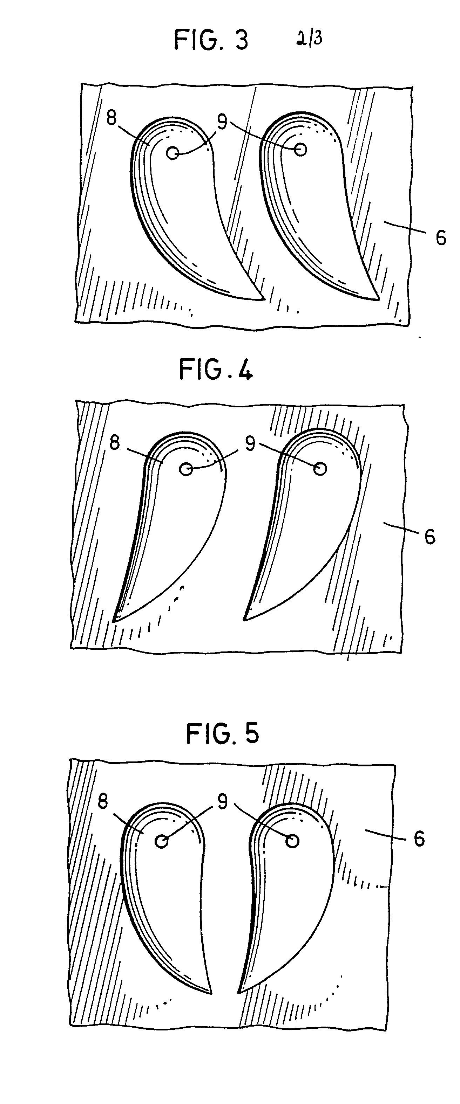

Wie aus der Fig. 1 ersichtlich ist, ist ein oberer Kugeltrichter 3', dessen Kugel eines kleineren Durchmessers ist als derjenige der Kugel des unteren Kugeltrichters 3, von einem Mantel 6 mit einem Kopf 7 dichtend umschlossen. Der Mantel 6 ist an seiner Aussenseite mit mehreren in Richtung des Kugeltrichters 3' weisenden Einstichen 8 versehen, die einen Rechts- oder Linksdrall oder Kombination der beiden Drälle besitzen (Fig. 3 bis 5). Im breiteren oberen Teil jedes Einstiches 8 ist eine Eintrittsdüse 9 für die Flüssigkeit und die Gase vorgesehen. Durch die entsprechende Anordnung der Einstiche 8 kann die Strömungsrichtung der Flüssigkeit bei ihrem Eintritt in den Raum zwischen dem Mantel 6 und dem Kugeltrichter 3' bestimmt werden.

Die aus mehreren rohrförmigen Teilen 2 zusammengesetzte Säule 1 kann sowohl die Kugeltrichter 3 als auch die von Mänteln 6 mit Köpfen 7 umschlossenen Kugeltrichter 3' enthalten. Die Kugeltrichter 3 bzw. 3' sind hintereinander gereiht, wobei der Abstand zwischen den benachbarten Kugeltrichtern 3 bzw. den von Mänteln 6 mit Köpfen 7 umschlossenen Kugeltrichtern 3' annähernd 1 cm beträgt. Auch der Abstand jedes Kugeltrichters 3 bzw. jedes Mantels 6 von der Innenwand des entsprechenden rohrförmigen Teiles 2 beträgt annähernd 1 cm. Die Grösse der Einstiche 8 kann je nach Bedarf geändert werden. Durch die im oberen Teil angebrachten Eintrittsdüsen 9 werden die Flüssigkeit und die Gase in einen höher gelegenen Teil des Innenraumes des Kugeltrichters 3' gezwungen. Die Kugeltrichter 3 erlauben im Gegensatz zu den Kugeltrichtern 3' eine längere Verweilzeit der Medien innerhalb des Innenraumes der Kugel. Im Innenraum der Kugel des Kugeltrichters 3' verweilen also die Medien für eine kürzere Zeit als bei dem Kugeltrichter 3. Die beiden Kugeltrichter 3, 3' können je nach den Medien und erfahrungstechnisch im Aufbau und in ihrer Folge variieren. Durch mechanische Steuerung wird die Grösse der Medien geregelt.

Jeder Kugeltrichter 3 bzw. jeder Mantel 6 ist in einem Halter 11 eingesetzt, der in dem rohrförmigen Teil 2 dichtend eingebaut ist, so dass die Flüssigkeit und die Gase während ihres Durchflusses durch die Säule 1 über den Halter 11 nicht durchfliessen können. Jeder Halter 11 weist eine Oeffnung 13 auf, in welcher sich der Trichter 3b des Kugeltrichters 3 bzw. 3' befindet. Die Flüssigkeit wird von oben in die Säule 1 durch einen Eintrittsstutzen 14 zugeführt, dessen Längsachse mit der Längsachse der Säule 1 einen Winkel von $60^{\circ}$ bis $50^{\circ}$ einschliesst. Dadurch wird der Flüssigkeit bei ihrem Eintritt in die Säule eine tangentiale Strömrichtung gegeben, um ihren Aufprall auf die

0018322

Kugeloberfläche bzw. Kopfoberfläche zu vergrössern. Im unteren Teil der Säule 1 ist ein im Querschnitt U-förmiger Becher 15 mit einer Oeffnung 16 im Steg des U-Buchstaben für den Trichter 3b des darüber liegenden Kugeltrichters 3 bzw. 3' vorgesehen. Seine Funktion besteht darin, dass er am unteren Ende der Säule 1 einen Ausgleichsraum für die von oben kommende unter Druck stehende Flüssigkeit und ein Sammelbecken bildet. Das untere Ende der Säule 1 ist durch einen Austrittstrichter 17 abgeschlossen, dessen oberer Teil zur Aufnahme einer Scheibe 18 mit kreisbogenförmigen Ausschnitten 19 bestimmt ist. Durch diese Ausschnitte wird der Flüssigkeitsabfluss gestaut.

An mindestens zwei der in einer Säule 1 hintereinander gereihten Kugeltrichter 3 bzw. der von Mänteln 6 und Köpfen 7 umschlossenen Kugeltrichter 3' sind Anschlussklemmen 10 für Gleichstrom vorgesehen. Da die Oberfläche der Kugeltrichter 3, 3' elektrisch leitend ist, kann diese, wenn sie an Gleichstrom angelegt ist, die Ionen und die Molekularstruktur der Flüssigkeit elektrolytisch beeinflussen. Die Anwendung der Elektrolyse richtet sich nach der Leitfähigkeit der Flüssigkeit und auch nach der variablen Leitschicht der Kugeltrichter 3, 3' (Fig. 1).

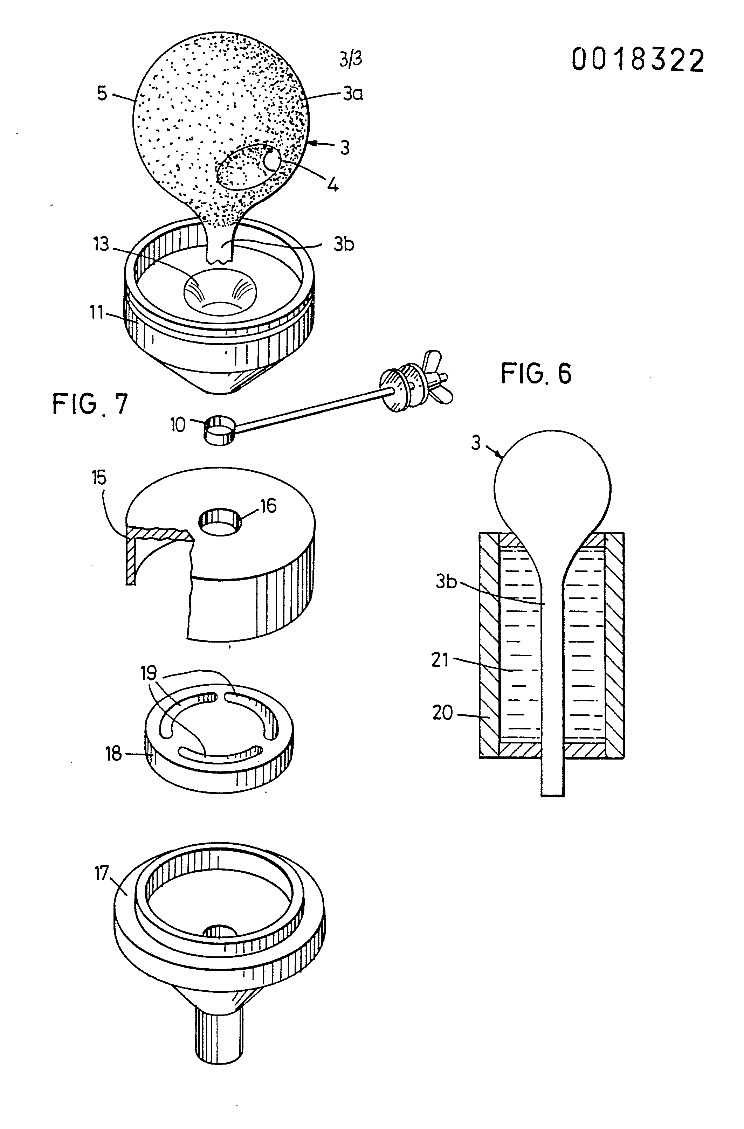

Gemäss der Fig. 6 bildet der Trichter 3b entweder eine Kathode oder eine Anode. Der Trichter 3b ist von einem einseitig wirkenden, porösen Diaphragma umschlossen. Zwischen dem Diaphragma 20 und dem Trichter 3b befindet sich ein Elektrolyt 21. Das Diaphragma 20 bildet die Anode bzw. die Kathode.

Es wird nun der Anreicherungsvorgang der Flüssigkeit mit Gasen in der Säule 1 beschrieben.

Die in die Säule 1 unter Druck tangential eingeführte Flüssigkeit prallt gegen die vergrösserte Fläche der Kugel 3a des Kugeltrichters 3 bzw. gegen den Kopf 7 des Mantels 6, wodurch sie zerstäubt wird. Die Flüssigkeitstropfen werden auf diese Weise physikalisch gespalten. Schon hier findet eine Teilaufnahme der Gase durch die Flüssigkeit statt. Durch den an den Kugeltrichter 3, 3' angelegten Gleichstrom wird die Spaltung der Flüssigkeit elektrolytisch beschleunigt. Durch den Aufprall auf die Kugeloberfläche bzw. Kopfoberfläche wird der normale rhythmische Fluss der Flüssigkeit zerstört, wie es in der Natur bei Wasserfällen der Fall ist. Die Flüssigkeit mit teilweise aufgenommenen Gasen fliesst dann zwangsläufig durch die Eintrittsöffnung 4 des Kugeltrichters 3 in den Innenraum der Kugel, wobei gleichzeitig die in der Säule 1 eingeführten Gase in den Innenraum der Kugel 3a eintreten. Im Innenraum der Kugel 3a erhält die Flüssigkeit, beeinflusst durch die Geschwindigkeit der Förderpumpe, eine Geschwindigkeit, wobei sie durch Zentripetalkraft zur Mitte der Kugel 3a hin in einer Wirbelbewegung bewegt wird. Es wird angenommen, dass die sich in der Nähe der Innenwand der Kugel befindlichen Gasmoleküle durch den Wirbelstrom mitgerissen und auf diese physikalische Weise vom Wasser vollständig aufgenommen werden, wobei die Formgebung des Trichters 3b und dessen Länge die Kompressionszone bestimmen.

Nach der Zerstäubung der Flüssigkeit durch ihren Aufprall auf den Kopf 7 tritt sie durch die Eintrittsdüsen 9 in Einstichen 8 des Mantels 6 in den durch den Mantel 6 und den Kopf 7 umschlossenen Raum oberhalb der Kugel 3a des Kugeltrichters 3'. Durch die Einstiche 8 kann die Strömungsrichtung der eintretenden Flüssigkeit links oder rechts oder gleichzeitig links und rechts bestimmt werden. Innerhalb des Raumes zwischen dem Kugeltrichter 3' und dem Mantel 6 mit dem Kopf 7 kann die Flüssigkeit durch Elektrolyse auf eine weitere im Inneren der Kugel stattfindende rein physikalische Behandlung vorbereitet
werden. Der durch die Zentripetalkraft verursachte
Wirbelvorgang im Innern der Kugel des Kugeltrichters
3' ist der gleiche wie schon bei dem Kugeltrichter 3
beschrieben wurde.

Durch die Variationen in der Anordnung der
Kugeltrichter 3 und der von Mänteln 6 mit Köpfen 7
umschlossenen Kugeltrichter 3' kann auf die diversen
Eigenschaften der Medien auch durch Umpolung der am
Gleichstrom angelegten Kugeltrichter 3, 3' eingegangen
werden. Auf diese Weise kann die Flüssigkeit elektrolytisch-physikalisch oder nur rein physikalisch beeinflusst werden. Durch die Elektrolyse wird lediglich der Prozess der Spaltung der Flüssigkeit beschleunigt.

Es hat sich gezeigt, dass der Links- bzw. Rechtsdrall bei den Flüssigkeiten eine Rolle spielt. So
z. B. kann beim Anreicherungsvorgang von Trinkwasser
durch Kohlendioxyd das Trinkwasser beim Linksdrall
besser gesättigt werden.

Anwendungsbeispiele

1. Das auf die oben beschriebene Weise mit Sauerstoff behandelte chemisch und bakteriologisch wenig
belastete Wasser, z. B. Trinkwasser, bringt die Voraussetzung mit sich, den Sauerstoffpegel länger zu
erhalten. Wie aus dem beiliegenden Diagramm I ersichtlich ist, beträgt die Zeit, während welcher sich ein
hoher Sauerstoffpegel erhalten kann, 6 Stunden.

10

DIAGRAMM I

Sauerstoff-Aufnahme und Stabilität von normalem Trinkwasser nach einer Behandlung, ohne Hilfsmittel wie Ozon
oder mittels Ultraviolett-Betrahlung / 20°C    730 m/n HG

Prozesszeit der Begasung

mg/l O$_2$

Zeit in Stunden

2. Häusliche Abwässer, die in einer kommunalen Reinigungsstufe behandelt wurden, erreichen beim Verlassen der Kläranlage in den seltesten Fällen einen Sauerstoffgehalt von mehr als 3 bis 6 mg/ℓ. Mittels vorgenannter Vorrichtung kann der freie Sauerstoffgehalt dieser Abwässer ohne Problem auf einen Wert von bis zu 20 mg/ℓ gebracht werden. Der nachteilige bakteriologische Zustand der Abwässer ist jedoch von tragender Bedeutung für die Aktivität des überschüssigen Sauerstoffes. Beim Einleiten von an Sauerstoff niedrig wertigen Abwässern in Fliess- oder Stillwasser muss sich somit auch ihr Sauerstoffpegel erniedrigen. Somit wird auch die Verschmutzung der Gewässer wirkungsvoll bekämpft (siehe das Diagramm II).

12

DIAGRAMM II

Sauerstoff-Aufnahme und Stabilität nach der Behandlung
kommunaler Abwasser, ohne Hilfsmittel wie Ozon oder
mittels Ultraviolett-Bestrahlung / 20°C    730 m/n HG

Prozesszeit der Begasung

Zeit in Stunden

3. Rohe Kuh-Milch wurde in einem geschlossenen Kreislauf während einiger Minuten mittels Sauerstoff und Kohlendioxyd angereichert. Die Spaltung zu Butterfett und Magermilch erfolgte ohne den Umweg über die übliche Entrahmung. Durch die Butterfettausscheidung wurde der Butterfettgehalt der Butter erhöht. Die erzeugte Buttermenge lag deutlich über der normalen Quantität (um etwa 20 bis 30 % mehr) der konventionellen Art der Gewinnung. Beide applizierten Gase sind lebensmittelkonform und physiologisch unbedenklich.

Die oben beschriebene Vorrichtung kann zur Absorption und elektrochemischen Umsetzung von toxischen und geruchbelästigenden Gasen verwendet werden. Dabei kann wahlweise eine anodische Oxydation oder kathodische Reduktion eingesetzt werden.

Die Phasentrennung von Emulsionen durch Gaseinwirkungen und elektrolytische Einflüsse kann bei chemischen oder biochemischen Prozessen eingesetzt werden. Die Vorrichtung eröffnet weiter Möglichkeiten bei der Synthese von organischen Verbindungen.

Durch die Wirbelkompression in dem Kugeltrichter werden solche günstige Verhältnisse geschaffen, dass z. B. eine elektrochemische Einleitung von oder die stoechiometrische Beteiligung des elektrochemischen Ladungsaustausches bei der Polymerisation durchgeführt werden können.

Die Vorrichtung kann einen offenen Durchlauf haben oder einen geschlossenen Kreislauf bilden, in welch letztgenanntem Falle mehrere Säulen aneinander angschlossen sind. Die Wahl der Ausführung richtet sich nach der Art der Medien sowie der gewünschten Zielsetzung bei der Anreicherung.

Das Konstruktionsprinzip ermöglicht den Bau von sowohl Kleinstvorrichtungen für die Anreicherung

14 0018322

mit Gasen von einigen Dezilitern Flüssigkeit als
auch für den Einsatz praktisch unbeschränkter Flüssigkeitsmengen ($m^3$/h). Im herkömmlichen Sinne sind
keine mechanischen Teile in der Vorrichtung eingebaut, die einem Verschleiss unterliegen. Der Unterhalt der oben beschriebenen Vorrichtung beschränkt
sich somit auf Austausch von Dichtungen und Wartung
des Pumpenagregates.

PATENTANSPRUECHE
_____

1. Verfahren zur Anreicherung einer Flüssigkeit, wie Wasser, Milch, mit Gasen, wie Sauerstoff, Kohlendioxyd, wobei die Flüssigkeit und die Gase zwangsläufig in eine vertikale Säule eingeführt werden, um sie zu durchfliessen, dadurch gekennzeichnet, dass die Flüssigkeit während des Durchflusses der Säule mindestens einmal physikalisch oder elektrolytisch-physikalisch gespalten und anschliessend in eine zentripetale Wirbelbewegung gesetzt wird, um die Gase während des Spalt- und Wirbelvorganges vollständig aufzunehmen.

2. Vorrichtung zur Ausführungs des Verfahrens nach Patentanspruch 1, mit einer aus mindestens einem rohrförmigen Teil bestehenden Säule, einem die Flüssigkeit in die Säule unter Druck fördernden Mittel und einem die Gase in die Säule unter Druck fördernden Mittel, gekennzeichnet durch einen hohlen in jedem rohrförmigen Teil (2) der Säule (1) angeordneten Kugeltrichter (3, 3') mit einer elektrisch leitenden Oberfläche und einer in das Innere der Kugel (3a) führenden Eintrittsöffnung (4), die so ausgerichtet ist, dass sie die Strömungsrichtung der in die Kugel (3a) eintretenden Flüssigkeit bestimmt.

3. Vorrichtung nach Patentanspruch 2, dadurch gekennzeichnet, dass der Kugeltrichter (3, 3') aus mit Metall bezogenem Glas oder Metall besteht, und dass die Kubeloberfläche, auf welche die Flüssigkeit vor dem Eintritt in die Kugel (3a) aufprallt, durch eine rauhe, auf die Glas- oder Metallunterlage galvanisch aufgetragene Metallschicht (5) vergrössert ist.

4. Vorrichtung nach Patentanspruch 2, dadurch gekennzeichnet, dass die Eintrittsöffnung (4) einen Links- oder Rechtsdrall besitzt.

5. Vorrichtung nach Patentanspruch 2, dadurch gekennzeichnet, dass der Kugeltrichter (3') von einem Mantel (6) mit einem Kopf (7)  dichtend umschlossen ist, welcher Mantel (6) mehrere Einstiche (8) mit Eintrittsdüsen (9) aufweist.

6. Vorrichtung nach Patentanspruch 5, dadurch. gekennzeichnet, dass die Einstiche (8) einen Links- oder Rechtsdralll oder deren Kombination besitzen.

7. Vorrichtung nach Patentanspruch 2, dadurch gekennzeichnet, dass in der Säule (1) mehrere Kugeltrichter (3) bzw. von Mänteln (6) mit Köpfen (7) umschlossene Kugeltrichter (3') hintereinander angeordnet sind, wobei der Abstand zwischen den benachbarten Kugeltrichtern (3) bzw. den von den Mänteln (6) mit Köpfen (7) umschlossenen Kugeltrichtern (3') annähernd 1 cm beträgt.

8. Vorrichtung nach Patentanspruch 7, dadurch gekennzeichnet, dass an mindestens zwei der Kugeltrichter (3) bzw. der von Mänteln (6) mit Köpfen (7) umschlossenen Kugeltrichter (3') Anschlussklemmen (10) für Gleichstrom vorgesehen sind oder der Gleichstrom an einem Kugeltrichter (3, 3') und einem ihn umschliessenden Diaphragma (20) mit Elektrolyt (21) angelegt ist.

9. Vorrichtung nach den Patentansprüchen 2 und 5, dadurch gekennzeichnet, dass der Kugeltrichter (3) bzw. der Mantel (6) in einem Halter (11) eingesetzt ist, der in dem rohrförmigen Teil (2) dichtend eingebaut ist.

10. Vorrichtung nach den Patentansprüchen 2 und 5, dadurch gekennzeichnet, dass der Abstand des Kugeltrichters (3) bzw. des Mantels (6) von der Innenwand des rohrförmigen Teiles (2) annähernd 1 cm beträgt.

0018322

FIG. 1

FIG. 2

FIG. 3    2/3

FIG. 3

8    9

6

FIG. 4

8    9

6

FIG. 5

8    9

6

0018322

5     3a

3

4

13     3b

11

FIG. 7

10

FIG. 6

15

16

3

3b

19

21

18

20

17

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 4 087 862 (TSIEN)<br><br>\* Spalte 1, Zeilen 66-68;<br>Spalte 2, Zeilen 1-16;<br>Figuren 1,2 \*<br><br>-- | 1,7 |
| A | FR - A - 835 696 (CENTRIFIX) | 1 |
| A | GB - A - 13 578 AD 1 904 (ELMORE) | 1 |
| A | GB - A - 1 322 249 (KALTHOFF) | 1 |
| A | US - A - 3 994 480 (FOTHERGILL) | 1 |
| P | DE - A - 2 812 105 (KLOCKNER)<br><br>\* Seite 15, Zeilen 10-18;<br>Figuren 1-5 \*<br><br>----- | 7 |

**KLASSIFIKATION DER ANMELDUNG (Int.Cl. 3)**

B 01 F 5/06
       5/18
B 03 D 1/14

**RECHERCHIERTE SACHGEBIETE (Int. Cl. 3)**

B 01 F
B 04 C
B 05 B
B 03 D
C 02 F
A 23 C
C 02 D

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 15-07-1980 | SALA |

EPA form 1503.1  06.78